(19) **Europäisches Patentamt / European Patent Office / Office européen des brevets**

(11) **EP 4 776 243 A1**

(12) # EUROPEAN PATENT APPLICATION

(43) Date of publication:
**15.07.2026 Bulletin 2026/29**

(21) Application number: **25382018.7**

(22) Date of filing: **14.01.2025**

(51) International Patent Classification (IPC):
**G06V 10/82** (2022.01)  **G06N 3/045** (2023.01)
**G06N 3/084** (2023.01)

(52) Cooperative Patent Classification (CPC):
**G06V 10/82; G06N 3/045; G06N 3/084**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Airbus Defence and Space, S.A.U.**
**28906 Getafe - Madrid (ES)**

(72) Inventors:
• **BELENGUER ALMECIJA, Salvador**
  **28906 Getafe (ES)**
• **PÉREZ IZQUIERDO, Joel**
  **28906 Getafe (ES)**

(74) Representative: **Elzaburu S.L.P.**
**Edificio Torre de Cristal**
**Paseo de la Castellana 259 C, planta 28**
**28046 Madrid (ES)**

(54) **COMPUTER IMPLEMENTED METHOD FOR TRAINING A FEED-FORWARD DEEP LEARNING MODEL INTENDED TO THE DETECTION AND INSTANCE SEGMENTATION OF OBJECTS**

(57) Computer implemented method for training a feed-forward deep learning model intended to the detection and instance segmentation of objects, comprising the steps of: inserting (S1) a gradient reversal layer (GRL) after a hidden layer of the deep learning model, inserting (S2) a domain classifier layer (DCL) after the gradient reversal layer (GRL); introducing (S3) a set of input values (I) of training data into an input layer of the deep learning model; obtaining (S4) a set of output values (O) in response to said input values (I); calculating (S5) a loss function of the last hidden layer of the deep learning model, calculating (S6) the gradient of the loss function; propagating backwards the loss function and repeating steps (S5) and (S6) for each hidden layers and adjusting (S7) the weight of each hidden layer, so as to minimize the gradient of the loss function.

Fig. 1

## Description

## Technical field

The present invention refers to processing of information gathered by sensors, assisted with data-driven Deep Learning (DL) models, for example and without limitation, processing aimed at image classification tasks. The present invention is applicable in different technical fields such as, aircraft and ship navigation, surveillance applications, computer vision (CV) systems, and defence applications, for example, target acquisition and reconnaissance (ISTAR).

More particularly, this invention refers to a computer implemented method for training a deep learning model intended to process information gathered by sensors, which, among other advantages which will described in further detail below, prevents the appearance of domain distribution shifts and allows the deep learning model to learn from less training data, while maintaining similar performance as compared with current state of the art models.

A second object of the present invention refers to a computer readable medium comprising instructions which, when executed in a computer, cause the computer to carry out the abovementioned method for training the deep learning model.

## Background of the invention

Nowadays, diverse apparatuses such as, autonomous drones, robotics and self-driving cars benefit from deep learning (DL) models to meet unalike intended functions such as situation awareness, Guidance, Navigation and Control (GNC) and/or target acquisition and reconnaissance. In the case of computer vision systems and Light Detection and Ranging (LiDAR) processing, Deep Learning (DL) models -i.e., a subset of Machine Learning models (ML), in which artificial neural networks are used for complex tasks- stand out at providing semantics of the environment apart from intelligent and complex pattern recognition.

Nevertheless, one disadvantage of deep learning models, is that they usually require high-volume data to be properly trained. In fact, some of the big tech company DL models which are currently in production do not stand out for being the most state-of-the-art algorithm for the task at hand. Instead of this, what is truly remarkable is the amount of data used to fill the capacity of the model during training. In fact, with large amounts of data, it is easier to properly represent the intrinsic variance a target data distribution might have, even including low occurrence probability edge (corner) cases. Apart from that, operating at large data volumes works as a natural regularizer and prevents models from overfitting the training data.

For this reason, the so-called Frugal Deep Learning (Frugal DL) models, have progressively acquired greater importance. In other words, ML models which, due to their improved design or the methodical strategies followed by the corresponding algorithms, are capable of learning from less training data than current state-of-the-art ML models, while maintaining similar performance.

Frugal DL models are of particular interest in those cases in which there is a low availability of real-world up-to-date data, for example due to the nature of the problem itself (e.g. infrequent occurrence of the event to be analysed, such as, a crack detection) or because data cannot be shared (for confidentiality or poor connectivity reasons).

An alternative that has been conceived to address those cases in which there is an absence of sufficiently diverse real-world data, and/or it is not possible to label it with enough quality (for example, due to its cost and timeline), consists in creating synthetic data for training ML models. However, several inconvenients can arise because of the use of said synthetic data, namely:

- using synthetic data can introduce domain distribution shifts. For example, in the case of images, there can be shifts due to, for example, camera colorization, location, weather, time of day and seasons;

- carelessly generated synthetic data can inadvertently introduce noise and biases into the training dataset. These inaccuracies have the potential to cascade throughout the ML model, hurting its capacity to produce predictions;

- there is no guarantee that a model trained on large volumes of synthetic data is going to generalize well in the real-world domain, which is set to be essential for the certification of safety-critical DL systems.

Following up with the example of DL models applied to images, humans can perceive or have an intuition of the differences between domains, but DL models need to quantify such a phenomenon for being able to detect it.

Consequently, still there is a need to develop new DL models which can prevent the appearance of domain distribution shifts caused, for example, by the use of synthetic training data and of training methods which allow the Deep Learning model to learn from less training data, while maintaining similar performance as compared with current state of the art models.

## Summary of the invention

With the aim of providing a solution to the abovementioned problems, a first object of the present invention refers to a computer implemented method for training a feed-forward deep learning model intended to the detection and instance segmentation of objects, the deep learning model comprising:

- one input layer, arranged for receiving a set of of input values;
- a plurality of successive hidden layers, each hidden layer being arranged for processing the set of input values or alternatively, for processing a set of intermediate values coming from the preceding hidden layer, by assigning them a weight, and an activation function; and
- one output layer, arranged for providing a set of output values based on the values received from the last hidden layer;

the method being characterized in that comprises the steps of:

i) inserting a gradient reversal layer, after a hidden layer of the deep learning model, the gradient reversal layer working as an identity transform during the feed-forward operation of the deep learning model and working by reversing the gradients of the values and multiplying them by a domain regularization factor during a backward operation of the deep learning model;

ii) inserting a domain classifier layer immediately after the gradient reversal layer;

iii) providing training data, including a set of input values and a set of corresponding target output values and introducing the set of input values of the training data into the input layer of the deep learning model;

iv) obtaining a set of current output values generated by the deep learning model in response to input values of the training data;

v) calculating a task-specific loss function of the last hidden layer of the deep learning model, the loss function being therefore dependent on the task at hands;

vi) calculating the gradient of the loss function with respect to the weight of the last hidden layer of the deep learning model;

vii) repeat steps v) and vi) for all the hidden layers of the deep learning model, by propagating backwards the loss function; and

viii) adjust the weight, of each hidden layer of the deep learning model so as to minimize the gradient of the loss function for each hidden layers.

The method for training a feed-forward deep learning model according to the present invention is a variant of the training method usually known as backpropagation (contemplated in steps iii) to viii) above) which is provided with four new additional steps: step i) in which a gradient reversal layer is inserted after a hidden layer of the deep learning model, step ii) wherein a domain classifier layer is inserted immediately after the gradient reversal layer (the purpose of this step is to extract a signal to tell apart what input corresponds to the source domain and which to the target domain); step iii) compute the domain classification loss and finally step iv) add it to the task-specific loss so that the gradients can also flow from the domain classification head to the rest of the neural net.

Thanks to these additional stages it is possible to improve the performance of the training method, something which is particularly advantageous when said training is based on synthetic or partially synthetic datasets. In fact, the proposed invention is able to fix some caveats of incorporating synthetic data into the training loop of DL models.

In particular, the proposed invention brings several advantages over synthetic-only or hybrid synthetic-real training, and over other adaptation methods. Thus, the method according to the present invention makes it possible to boost performance of deep learning models when training on labelled synthetic datasets (source domain). This boost can be achieved by adding unannotated real-world data (target domain) and training in a semi-supervised manner. On the other hand, the method of the present invention exhibits greater performance boosts when the real-world data (target domain) added for training is also annotated, in which the training is, preferably, fully-supervised. Moreover, this method does not modify the DL model architecture in inference/prediction mode as the domain classifier is stripped from the deep learning model after training. Therefore, it does not affect inference/prediction time.

Preferably, the feed-forward deep learning model to which the training method of the present invention is applied is provided with:

- an encoder part, arranged for extracting features from the input values and producing a set of context vectors in the so-called latent space;
- a neck part, disposed between the encoder part and the decoder part; and
- a decoder part; arranged for generating a set of output values based on the context vectors received from the encoder part.

In this embodiment of the invention, described in the above paragraph, preferably both the gradient reversal layer and the domain classifier layer, are inserted in the neck part of the feed-forward deep learning model.

Thanks to this particular arrangement and the inherent working of the layer, the Gradient Reversal Layer (GRL) achieves updates with an effect similar to that of Generative Adversarial Networks (GAN), in which generator and discriminator Artificial Neural networks (ANNs) compete with each other in an adversarial fashion. Thus, while the DL model as a whole is trained to minimize the task-specific loss, it is forced to maximize the domain classification mismatch due to the GRL gradient signal reversion. Intuitively, as training elapses, the domain classification layer finds it more difficult to properly classify the domain because the encoder produces better domain-invariant features in the latent space. If the encoded features are domain-invariant, data from these domains will be interpreted and decoded by the task-specific head with similar results. Independently from whether the domain (i.e., the set of input values) is real or synthetic, each sample can contribute to the training with both the task-specific and the domain annotation (fully-supervised training), or solely with the domain label (semi-supervised training setting). The feature alignment enforced by backpropagation can be visualized in the latent space with dimensionality reduction techniques such as t-distributed Stochastic Neighbor Embedding (t-SNE) or Uniform Manifold Approximation (UMAP).

Preferably, the method of the present invention, is used to train a feed-forward deep learning model intended to identify objects from information gathered by at least one image acquisition device.

Image acquisition devices, used in the context of the present invention can operate in the visible region of the spectrum, in the infrared region of the spectrum, in the ultraviolet region of the spectrum, or simultaneously operate in several of said sections of the electromagnetic spectrum.

In one embodiment of the present invention, the task-specific loss function is the square of the difference between the output values and the target output values.

A second object of the present invention refers to a computer readable medium characterized in that it comprises instructions that, when executed in a computer, cause the computer to carry out any of the methods for training a feed-forward deep learning model, mentioned above and which form part of the first object of the invention.

**Brief description of the drawings**

As a means for better understanding at least one embodiment of the present invention, the following set of drawings is introduced by way of schematic illustration and in a non-limitative manner.

Figure 1: Shows a flux diagram illustrating one possible embodiment of a computer implemented method, according to the present invention, for training a feed-forward deep learning model.

Figure 2: Shows a schematic representation of the feed-forward deep learning model which is trained with the training method of Fig. 1.

Figure 3 - Shows a schematic representation of the feed-forward deep learning model applied to modern multi-scale object detectors and segmentators.

**Detailed description of the invention**

Throughout the description, the same alphanumeric references are used to designate the same or similar elements.

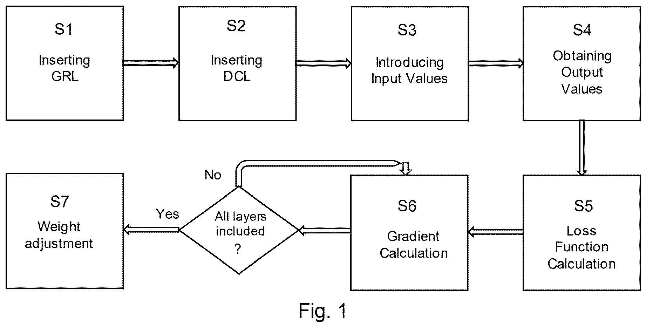

Figure 1 schematically depicts one preferred embodiment of the computer implemented method, according to the present invention, for training a feed-forward deep learning model, which is directed to the detection and instance segmentation of objects from information gathered by at least one image acquisition device.

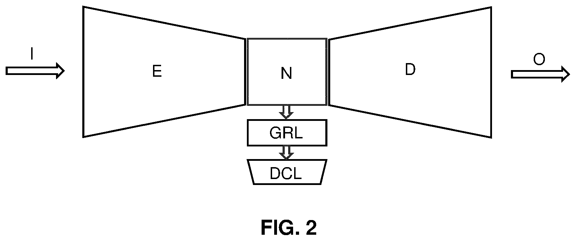

In this particular case, the feed-forward deep learning model has an encoder-decoder architecture, and as shown in Fig. 2, includes the following elements: an encoder part E, a neck part N and decoder part D.

The purpose of the encoder part E is extracting features from the input values, I, and producing a set of context vectors, the so-called latent space. The neck part N, in turn, connects the encoder part E with the decoder part D and the decoder part D is arranged for generating a set of output values O, based on the context vectors received from the encoder part. In the case of neural nets for object detection and segmentation, these outputs comprise the class of the object, the probability of an object being detected (depending on the detector architecture), bounding boxes and prototype instance segmentation masks.

The method shown in Fig.1 is implemented by means of a computer system including at least one logical storage unit and one logical processing unit. The logical storage unit stores instructions which, when executed in the logical processing unit, cause it to carry out the method for training the feed-forward deep learning model.

In the first step of the method shown in Fig. 1, step S1, a gradient reversal layer, GRL, is inserted just at the beginning of the neck portion of the feed-forward deep learning model (as represented schematically in Fig. 2).

Next, in step S2, a domain classifier layer, DCL, is disposed immediately after the gradient reversal layer, GRL, as shown in Fig. 2.

The gradient reversal layer GRL ($R\lambda$) works as an identity transform during the feed-forward operation of the deep learning model (i.e., during the normal operation of the deep learning model) according to the following expression:

$$R_\lambda(x) = x$$

The domain adaptation loss $\mathcal{L}_{da}$, associated to the domain classifier layer, DCL, which in this particular embodiment of the invention is simply a binary cross-entropy or logistic classification loss, is computed and added to the task-specific loss $\mathcal{L}_{ts}$ :

$$\mathcal{L} = \mathcal{L}_{ts} + \mathcal{L}_{da} = \sum_{i=1,...,N} l_{ts}^{i} + \sum_{i=1,...,N} l_{da}^{i}$$
$$y_{da}=0$$

On the other hand, during a backward operation of the deep learning model, the gradient reversal layer GRL works by reversing the gradients and multiplies them by a with a domain regularization factor ($\lambda$), which is a weighting factor to add or substract importance to the domain loss with respect to the task-specific loss. This effectively forces the feature encoder part E to produce domain-invariant features.

$$\frac{dR_{\lambda}}{dx} = -\lambda \cdot I$$

Next, the method for training a feed-forward deep learning model according to the present invention continues with the typical steps of a conventional backpropagation training method.

Thus, in step S3 training data is provided, including a set of input values I and a set of corresponding target output values. The set of input values I of the training data is introduced into the input layer of the deep learning model at the start of the encoder part E.

In step S4, the deep learning model is left to generate a set of current output values O, in response to input values I of the training data.

Next, in step S5 a loss function of the last hidden layer of the deep learning model is calculated. IN this particular case, the loss function is calculated as the square of the difference between the output values and the target output values output values with the target output values.

Similarly, in step S6 the gradient of the loss function with respect to the weight of the last hidden layer of the deep learning model is calculated.

Then steps S5 and S6 are repeated for all the hidden layers of the deep learning model, by propagating backwards the loss function.

Finally, in step S7 the weight, of each hidden layer of the deep learning model is adjusted, so as to minimize the gradient of the loss function for each hidden layers.

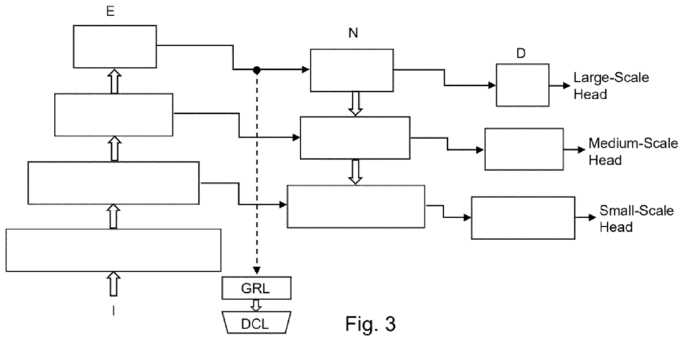

Fig. 3 shows an embodiment of the invention according to the present invention wherein the training method is applied to an up-to-date Artificial Neural Network (ANN) architecture with neural networks for detection and instance segmentation.

In the embodiment shown in Fig. 3 both the gradient reversal layer GRL and the domain classifier layer DCL are inserted right at the beginning of neck part N of the artificial neural network.

It is noted that, thanks to the placement of the Gradient reversal layer GRL in the location shown in figure 3 a boost in mixed real-synthetic data (cross-domain) settings is achieved. If the GRL is attached too upstream, there is a risk of insufficient feature alignment of the backbone (or encoder part E) during training, achieving an effect opposite to what is sought after. Similarly, it is not attached after the neck N, in an attempt to avoid excessively altering the training of the head (or decoder part D). Another reason is to avoid vanishing gradients of the domain component of gradients when they flow to the encoder with the training backward pass of the backpropagation algorithm. The trick is to attach a domain adaptation branch to the feature level that represents the most compressed information. That is to say, the GRL should be attached at the end of the encoder part (and therefore, right at the beginning of neck part N of the feed-forward deep learning model) regardless of the number of feature layers used for multi-scale feature fusion at the neck N. In this way, the gradients directly flow to the part that should be aligned.

Another proposed extension is to turn the domain classifier layer DCL from a binary classification problem into a multi-class classification problem. The rationale behind this is that there are situations where instead of having a source domain and a target domain, there are multiple domains. For instance, one could be using data from different synthetic simulators with statistically different outputs (i.e., in the example shown in Figure 3, large-scale head, medium -scale head and small-scale head). One could also be using real data from different camera or lens manufacturers. To address these situations, the domain adaptation output becomes multi-class and the binary cross-entropy loss turns to categorical cross-entropy. Similarly, the user of this innovation should have data labelled by domain origin, including any domain segregation seen fit.

**Claims**

1.  Computer implemented method for training a feedforward deep learning model intended to the detection and instance segmentation of objects, the deep learning model comprising:

    - one input layer, arranged for receiving a set of of input values (I);
    - a plurality of successive hidden layers, each hidden layer being arranged for processing the set of input values (I) or alternatively, for processing a set of intermediate values coming from the preceding hidden layer, by assigning them a weight, and an activation function; and
    - one output layer, arranged for providing a set of output values (O) based on the values received from the last hidden layer;

    the method being **characterized in that** comprises the steps of:

i) inserting (S1) a gradient reversal layer (GRL), after a hidden layer of the deep learning model, the gradient reversal layer (GRL) working as an identity transform during the feed-forward operation of the deep learning model and working by reversing the gradients of the values and multiplying them by a domain regularization factor during a backward operation of the deep learning model;

ii) inserting (S2) a domain classifier layer (DCL) immediately after the gradient reversal layer (GRL);

iii) providing training data, including a set of input values (I) and a set of corresponding target output values and introducing (S3) the set of input values of the training data into the input layer of the deep learning model;

iv) obtaining (S4) a set of current output values (O) generated by the deep learning model in response to input values (I) of the training data;

v) calculating (S5) a task-specific loss function of the last hidden layer of the deep learning model;

vi) calculating (S6) the gradient of the loss function with respect to the weight of the last hidden layer of the deep learning model;

vii) repeat steps v) and vi) for all the hidden layers of the deep learning model, by propagating backwards the loss function; and

viii) adjust (S7) the weight, of each hidden layer of the deep learning model so as to minimize the gradient of the loss function for each hidden layers.

2. Computer implemented method according to according to claim 1, wherein the feed-forward deep learning model comprises:

   - an encoder part (E), arranged for extracting features from the input values (I) and producing a set of context vectors in a latent space;
   - a neck part (N), disposed between the encoder part and the decoder part; and
   - a decoder part (D); arranged for generating a set of output values (O) based on the context vectors received from the encoder part (E).

3. Computer implemented method according to according to claim 2, wherein both the gradient reversal layer (GRL) and the domain classifier layer (DCL) are inserted in the neck part (N) of the feed-forward deep learning model.

4. Computer implemented method according to any of claims 1 to 3, wherein the task specific loss function is the square of the difference between the output values and the target output values.

5. Use of a computer implemented method according to any of claims 1 to 4, for training a feed-forward deep learning model directed to identify objects from information gathered by at least one image acquisition device.

6. Computer readable medium, **characterized in that** it comprises instructions that, when executed in a computer, cause the computer to carry out the method for training a feed-forward deep learning model, according to any of claims 1 to 4.

| S1 | | S2 | | S3 | | S4 |
|---|---|---|---|---|---|---|
| Inserting GRL | → | Inserting DCL | → | Introducing Input Values | → | Obtaining Output Values |

| S7 | | | | S6 | | S5 |
|---|---|---|---|---|---|---|
| Weight adjustment | ← Yes | All layers included ? | ← | Gradient Calculation | ← | Loss Function Calculation |

No

Fig. 1

I → E   N   D → O

GRL

DCL

**FIG. 2**

Fig. 3

Europäisches Patentamt
European Patent Office
Office européen des brevets

## EUROPEAN SEARCH REPORT

**Application Number**

EP 25 38 2018

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAROSLAV GANIN ET AL: "Unsupervised domain adaptation by backpropagation", JMLR WORKSHOP AND CONFERENCE PROCEEDINGS, vol. 37, 1 June 2015 (2015-06-01), pages 1180-1189, XP055349552, * page 1, column 1, line 1 - page 8, column 2, line end; figures 1-4 * ----- | 1-6 | INV. G06V10/82 G06N3/045 G06N3/084 |
| A | US 10 915 792 B2 (NEC LAB AMERICA INC [US]; NEC CORP) 9 February 2021 (2021-02-09) * column 2, line 35 - column 10, line 15; figures 1-6 * ----- | 1-6 | |
| A | ARSHAM GHOLAMZADEH KHOEE ET AL: "Domain Generalization through Meta-Learning: A Survey", ARXIV.ORG, CORNELL UNIVERSITY LIBRARY, 201 OLIN LIBRARY CORNELL UNIVERSITY ITHACA, NY 14853, 3 April 2024 (2024-04-03), XP091718549, * page 2, line 1 - page 31, last line; figures 1-11; tables 1-2 * ----- | 1-6 | |

**TECHNICAL FIELDS SEARCHED (IPC)**

G06V
G06N

The present search report has been drawn up for all claims

| Place of search | Date of completion of the search | Examiner |
|---|---|---|
| The Hague | 14 April 2025 | Thibault, Guillaume |

EPO FORM 1503 03.82 (P04C01)

## ANNEX TO THE EUROPEAN SEARCH REPORT
## ON EUROPEAN PATENT APPLICATION NO.

EP 25 38 2018

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | | Publication date | Patent family member(s) | | Publication date |
|---|---|---|---|---|---|
| US 10915792 | B2 | 09-02-2021 | JP | 7113093 B2 | 04-08-2022 |
| | | | JP | 2021529377 A | 28-10-2021 |
| | | | US | 2020082221 A1 | 12-03-2020 |
| | | | WO | 2020051053 A1 | 12-03-2020 |

EPO FORM P0459

For more details about this annex : see Official Journal of the European Patent Office, No. 12/82